# EUROPÄISCHE PATENTANMELDUNG

(11) **EP 2 592 053 A2**
(43) Veröffentlichungstag der Anmeldung: **15.05.2013**
(21) Anmeldenummer: 12192049.0
(22) Anmeldetag: 09.11.2012
(51) Int. Cl.: C02F 1/461, B42D 15/00

(54) **Verfahren zur Herstellung eines Katholyts und dessen Verwendung**

(30) Priorität: 09.11.2011 DE 102011055186
(71) Anmelder: Monopharm Beratungs- Und Handelsgesellschaft Mbh, 21444 Vierhöfen (DE)
(72) Erfinder: Waldemar, Tim Kreiter, 21444 Vierhöfen (DE)
(74) Vertreter: von Puttkamer · Berngruber

(57) **Zusammenfassung**

Zur Herstellung eines Katholyts nach dem Diaphragmalyse-Verfahren wird der Elektrolysezelle eine Alkalichloridlösung zugeführt, welcher ein Mittel zur Stabilisierung des Katholyts und ein Salz eines Übergangsmetalls zugesetzt ist.

## Beschreibung

Die Erfindung bezieht sich auf ein Diaphragmalyse-Verfahren zur Herstellung eines Katholyts sowie dessen Verwendung.

Aus DE 10 2007 033 445 A1 ist ein derartiges Diaphragmalyse-Verfahren bereits bekannt. Durch den Zusatz des Alkali- oder Erdalkalisulfats oder Aluminiumsulfats, beispielsweise als Alaun, wird zwar ein Katholyt erhalten, der über Monate stabil ist, jedoch ist dessen reduzierende Wirkung gering.

Aufgabe der Erfindung ist es, ein Verfahren zur Herstellung eines Katholyts bereitzustellen, welcher bei hoher Langzeitstabilität eine hohe reduzierende Wirkung aufweist.

Dies wird erfindungsgemäß mit einem Diaphragmalyse-Verfahren erreicht, bei dem dem Anodenraum und dem Kathodenraum einer Elektrolysezelle, welche durch ein Diaphragma voneinander getrennt sind, ein wasserlösliches Alkalichlorid, ein wasserlösliches Salz eines Übergangsmetalls und ein Mittel zur Stabilisierung des Katholyts zugesetzt wird.

Als wässrige Alkalichloridlösung kann Kochsalz, also Natriumchlorid verwendet werden, aber beispielsweise auch ein Gemisch aus Natriumchlorid und Kaliumchlorid. Die Alkalichloridlösung wird vorzugsweise als gesättigte Lösung eingesetzt. Es kann jedoch auch eine verdünnte Lösung verwendet werden, beispielsweise kann der Alkalichloridgehalt einer um bis das 20-fache verdünnten gesättigten Lösung entsprechen.

Der zugeführten Alkalichloridlösung können 1 bis 100 g, insbesondere 10 bis 30 g des wasserlöslichen Salzes des Übergangmetalls pro Liter zugesetzt sein. Als Übergangsmetallsalz wird vorzugsweise ein wasserlösliches Zinksalz verwendet. Das Übergangsmetallsalz oder Zinksalz wird vorzugsweise als Sulfat oder Acetat oder als Salz einer anderen organischen Säure eingesetzt.

Das Stabilisierungsmittel ist vorzugsweise Alkali- und/oder Erdalkalisulfat und/oder Aluminiumsulfat. Die Menge des Alkali- und/oder Erdalkalisulfats oder Aluminiumsulfats kann 1 bis 50 g pro Liter Alkalichloridlösung betragen.

Das Alkalisulfat, das der zugeführten Alkalichloridlösung zugesetzt wird, kann beispielsweise Natriumsulfat und das Erdalkalisulfat beispielsweise Magnesiumsulfat sein, während das Aluminiumsulfat in Form eines Alauns, insbesondere Kaliumalaun, vorliegen kann.

Außer dem Alkali- und/oder Erdalkalisulfat und/oder Aluminiumsulfat können der der Elektrolysezelle zugeführten Alkalichloridlösung zur Stabilisierung des Katholyt auch Alkali- und/oder Erdalkalinitrate, wie Magnesiumnitrat, oder Alkali- oder Erdalkalihydroxide, wie Magnesiumhydroxid, aber auch Perchlorsäure oder Kupfernitrat zugesetzt werden.

Der Katholyt kann einen pH-Wert von 12 oder 13 und ein Redoxpotential von -200 mV, vorzugsweise -500 mV oder ein noch negativeres Redoxpotenzial aufweisen.

Vorzugsweise wird daher der im Kathodenraum der Elektrolysezelle gebildete basische Katholyt mit einem pH-Wert von 12 oder mehr zur Bildung eines Katholyts mit einem pH-Wert von weniger als 12 wenigstens ein weiteres Mal einer Elektrolysezelle durchgeführt. Dabei kann es sich um die gleiche Elektrolysezelle handeln, in der der Katholyt zuvor gebildet worden ist oder um eine oder mehrere nacheinander geschaltete Elektrolysezellen, denen jeweils der Katholyt, der in der vorgeschalteten Elektrolysezelle gebildet worden ist, zugeführt wird.

Die Anzahl der Stufen dieses mehrstufigen Verfahrens hängt von dem gewünschten pH-Wert des am Ende gebildeten Katholyt ab.

Dabei wird vorzugsweise in jeder Stufe, also vor der Zufuhr des Katholyts zu der gleichen oder einer anderen Elektrolysezelle der Katholyt erneut mit einem wasserlöslichen Übergangsmetallsalz versetzt, und zwar vorzugsweise mit 1 bis 100 g, insbesondere 5 bis 50 g, ganz besonders bevorzugt 10 bis 30 g Übergangsmetallsalz pro Liter Katholyt, der in der jeweiligen Elektrolysezelle gebildet worden ist.

Mit der zwei- oder mehrstufigen Ausbildung des erfindungsgemäßen Verfahrens nach Anspruch 8 oder 9 kann damit der pH-Wert des Katholyts beliebig von pH12 bis pH8, also nahezu neutral, eingestellt werden.

Aufgrund des pH-Werts von weniger als 12, insbesondere weniger als 10, und seiner Stabilität über einen langen Zeitraum kann der Katholyt in der Kosmetik und in der Human- und Tiermedizin eingesetzt werden. So kann er beispielsweise zur Behandlung von Schimmel und Pilzbefall auf der Haut verwendet werden. Auch kann der Katholyt gegen Sodbrennen zum pH-Ausgleich im Magen-Darm-Trakt eingesetzt werden. Eine weitere Anwendungsmöglichkeit des auf weniger als über pH12, insbesondere weniger als pH10 eingestellten Katholyts ist beispielsweise die Verwendung als Spray gegen Juckreiz und insbesondere Insektenstiche. So lässt bei Insektenstichen der Juckreiz nach und die Schwellung bei einer Behandlung mit dem Katholyt geht zurück. Auch ist die Verwendung in der Fußpilzprophylaxe beispielsweise im Sport und im Wellness-Bereich möglich. Auch können medizinische Fußbäder mit dem Katholyt hergestellt werden. Darüber hinaus ist der reduzierend wirkende Katholyt hervorragend als Reinigungsmittel, insbesondere zur Entfernung organischer Verschmutzungen, einschließlich Schimmel, verwendbar. Dabei ist die reinigende Wirkung des Katholyts so stark, dass in der Regel auf Zusatzstoffe ganz, jedenfalls weitgehend verzichtet werden kann. Beispielsweise reicht eine Zugabe von Tensiden in so geringer Menge aus, dass der Grenzwert von 0,2 Gew.% der Detergenzienverordnung unterschritten werden kann. Damit wird mit dem Katholyt ein Reinigungsmittel erhalten, das hochwirksam ist, der EG-Öko-Verordnung, Anhang II, E entspricht und praktisch allergiefrei ist.

Mit dem Katholyt wird zugleich ein Reinigungsmittel zur Verfügung gestellt, das sich insbesondere für sensible Bereiche, wie in der Babypflege, der Reinigung von Tieren aber auch z. B. zur Reinigung von Krankenzimmern hervorragend eignet.

Dabei wird der pH-Wert des Katholyts der jeweiligen Verwendung des Reinigungsmittels angepasst. So wird beispielsweise zur Reinigung einer schwermetallhaltigen Flüssigkeit vorzugsweise ein pH-Wert von 12 oder 13 verwendet, um die Schwermetalle auszufällen.

Ferner kann der Katholyt z.B. in Form eines Reinigungsbades zur Reinigung, insbesondere metallischer Gegenstände z.B. aus Silber, Edelstahl, Kupfer oder Aluminium verwendet werden.

Der Katholyt ist ferner als Fleckenentfernungsmittel einsetzbar. So werden beispielsweise Rotwein- oder Obstflecken in kurzer Zeit vollständig entfernt.

Ein als Reinigungsmittel besonders wirksamer Katholyt wird erhalten, wenn das erfindungsgemäße Diaphragmalyseverfahren derart durchgeführt wird, dass dem Kathodenraum der Elektrolysezelle kontinuierlich mindestens 40 Vol-%, vorzugsweise ca. 50 Vol-%, und dem Anodenraum höchstens 60 Vol-%, insbesondere ca. 50 Vol-% der mit dem Stabilisierungsmittel und dem Übergangsmetallsalz versetzten Alkalichloridlösung zugeführt wird.

Der dabei gebildete Katholyt hat sich hervorragend zur Beseitigung organischer Verschmutzungen, wie Fett, Nikotinkondensat, Blut und dergleichen erwiesen.

Die reduzierende Wirkung, also das negative Redoxpotential des Katholyts beeinflusst zudem das Wachstum lebender Organismen. Beispielsweise ist der Katholyt als Mittel zur Beschleunigung des Pflanzenwachstums verwendbar.

Wie festgestellt werden konnte, weist der erfindungsgemäß hergestellte Katholyt eine Reinigungskraft auf, die der eines handelsüblichen Fensterreinigers entspricht, und dies ohne deklarationspflichtige Mengen von Tensiden.

Zudem wurde festgestellt, dass der erfindungsgemäß hergestellte Katholyt eine keimtötende Wirkung besitzt. Er ist insbesondere auch für medizinische Anwendungen z.B. als basisches Wasser geeignet.

### Beispiel

Es wurde ein Katholyt nach dem erfindungsgemäßen Verfahren hergestellt. Der zugeführte wässrigen Kochsalzlösung wurden 20g Zinksulfat pro Liter zugesetzt.

Die Konzentration der Natronlauge in dem gebildeten Katholyt betrug 0,7 g/l.

Das Verfahren wurde wiederholt, außer dass kein Zinksulfat zugesetzt wurde. Die Konzentration der Natronlauge in dem gebildeten Katholyt betrug 2,4 g/l.

Die Reinigungsleistung war in beiden Fällen identisch. Das heißt, der erfindungsgemäß hergestellte Katholyt mit deutlich reduziertem Natronlaugen-Gehalt ist bei identischer Reinigungsleistung wesentlich umweltfreundlicher.

## Patentansprüche

1. Diaphragmalyse-Verfahren zur Herstellung eines Katholyts bei dem dem Anodenraum und dem Kathodenraum einer Elektrolysezelle, welche durch ein Diaphragma voneinander getrennt sind, jeweils eine Alkalichloridlösung zugeführt wird, welcher ein Mittel zur Stabilisierung des Katholyts zugesetzt ist, **dadurch gekennzeichnet, dass** der zugeführten Alkalichloridlösung ein Salz eines Übergangsmetalls zugesetzt wird.

2. Verfahren nach Anspruch 1, **dadurch gekennzeichnet, dass** dem Kathodenraum der Elektrolysezelle mindestens 40 Vol-% und dem Anodenraum höchstens 60 Vol-% der mit dem Stabilisierungsmittel und dem Übergangsmetallsalz versetzten Alkalichloridlösung zugeführt wird.

3. Verfahren nach Anspruch 1 oder 2, **dadurch gekennzeichnet, dass** der zugeführten Alkalichloridlösung 1 bis 10 g des Übergangsmetallsalzes pro Liter zugesetzt werden.

4. Verfahren nach einem der Ansprüche 1 bis 3, **dadurch gekennzeichnet, dass** das Übergangsmetallsalz ein Zinksalz ist.

5. Verfahren nach einem der Ansprüche 1 bis 4, **dadurch gekennzeichnet, dass** das Salz des Übergangsmetalls ein Sulfat oder das Salz einer organischen Säure ist.

6. Verfahren nach Anspruch 1 oder 2, **dadurch gekennzeichnet, dass** das Mittel zur Stabilisierung des Katholyts ein Alkali- und/oder Erdalkalisulfat und/oder Aluminiumsulfat ist.

7. Verfahren nach Anspruch 6, **dadurch gekennzeichnet, dass** das Alkalisulfat Natriumsulfat, das Erdalkalisulfat Magnesiumsulfat und das Aluminiumsulfat Alaun ist.

8. Verfahren nach Anspruch 6 oder 7, **dadurch gekennzeichnet, dass** die der Alkalichloridlösung zugesetzte Menge des Alkali- und/oder Erdalkalisulfats und/oder Aluminiumsulfats insgesamt 1 bis 50 g pro Liter Alkalichloridlösung beträgt.

9. Verfahren nach einem der Ansprüche 1 bis 8, **dadurch gekennzeichnet, dass** der im Kathodenraum der Elektrolysezelle gebildete Katholyt zur Bildung eines Katholyts mit einem pH-Wert von weniger als pH12 wenigstens ein Mal der gleichen oder einer anderen Elektrolysezelle zugeführt wird.

10. Verfahren nach Anspruch 9, **dadurch gekennzeichnet, dass** dem Katholyt vor seiner Zufuhr zu der gleichen oder einer anderen Elektrolysezelle ein Salz eines Übergangsmetalls gemäß einem der Ansprüche 1 bis 4 zugeführt wird.

11. Verwendung des nach einem der Ansprüche 1 bis 10 hergestellten Katholyts als Reinigungsmittel.

12. Verwendung des nach einem der Ansprüche 1 bis 10 hergestellten Katholyts in der Kosmetik oder Medizin.

13. Verwendung des nach einem der Ansprüche 1 bis 10 hergestellten Katholyts zur Beschleunigung des Pflanzenwachstums.

14. Verwendung des nach einem der Ansprüche 1 bis 10 hergestellten Katholyts für medizinische Anwendungen.
